# EUROPEAN PATENT SPECIFICATION

(11) **EP 3 492 160 B1**
(45) Date of publication and mention of the grant of the patent: **18.11.2020**
(21) Application number: 18209273.4
(22) Date of filing: 29.11.2018
(51) Int. Cl.: B01D 46/00, B01D 46/24, B01D 46/42

(54) **CARTRIDGE MONITORING SYSTEM FOR INDUSTRIAL AIR FILTERING PLANTS**
FILTERKARTUSCHENÜBERWACHUNGSSYSTEM FÜR INDUSTRIELLE LUFTFILTER
SYSTÈME DE SURVEILLANCE DE CARTOUCHE FILTRANTE POUR FILTRES À AIR INDUSTRIELS

(30) Priority: 01.12.2017 IT 201700139104
(43) Date of publication of application: 05.06.2019
(73) Proprietor: AUTEL S.r.l., 41049 Sassuolo (MO) (IT)
(72) Inventor: Mazzacani, Claudio, 41049 Sassuolo (MO) (IT)
(74) Representative: Grana, Daniele

(56) References cited:
- EP-A1- 1 985 351
- WO-A1-2005/113112
- DE-A1-102013 004 112
- US-A1- 2017 173 505

## Description

The present invention relates to a cartridge monitoring system for industrial air filtering plants.

It is known that in the industrial field it is mandatory by law to carry out the treatment of the air used during industrial processes, before its re-emission into the atmosphere.

In fact, it is necessary to remove the highest number of polluting particles and the amount of pollutants per cubic meter of air is generally established at the legislative level by the various States.

The polluting particles can be in a solid, liquid or gaseous state.

In particular, industrial air filtering plants are used to intercept solid state particles.

More specifically, the most common and efficient industrial air filtering plant uses one or more cartridges or sleeves filters.

These special plants are also used when it is necessary to reduce the dust present in the air before the air is introduced into the industrial process (this is the case, e.g., of the so-called turbogas central units concentrated in areas with a strong presence of sand).

The cartridges/sleeves filter generally consists of a "dirty" chamber, in which the cartridges or sleeves are installed, and of a "clean" chamber, in which devices are installed which are adapted to clean the filter elements.

Generally, the cartridges and sleeves comprise a filtering surface with a substantially tubular shape which separates the "dirty" chamber from the "clean" chamber.

However, unlike the filtering surface of the sleeves, the filtering surface of the cartridges is folded on itself several times in a fan-like pattern.

This way, the occupied volume being equal, the filtering surface of a cartridge is substantially greater than the filtering surface of a sleeve.

In this regard, in order to simplify the continuation of the treatise, the terms cartridge and sleeve are used in an equivalent manner.

In fact, the invention in question can be used indifferently, quite apart from whether sleeve filters or cartridge filters are used.

During the industrial process, the process air is forced through the cartridges and the polluting particles are therefore withheld on the outer face of each filtering surface.

Over time, polluting particles accumulate in such a way as to cause a drop in filtration efficiency.

In order to maintain high filtration efficiency, it is therefore necessary to carry out constant cleaning of the cartridges.

The use is therefore known of suitable systems for cleaning industrial filters. The most widely used system is that providing for the creation of an instantaneous air flow contrary to the normal process air flow generated by special valves known as "pulse jet valves".

These valves are installed on board tanks which have the function of accumulating compressed air and are commonly activated by means of a respective solenoid.

The air flow generated by the valves is directed inside the cartridges, thus causing them to shake. The polluting particles then tend to detach from the filtering surface and precipitate.

A valve of the "pulse jet" type can generally clean several cartridges. Nevertheless, the continuous working and cleaning cycles performed by the industrial air filtering plant progressively deteriorate the cartridges until they break.

The broken cartridges must therefore be replaced with new ones, which are conveniently sold by the filter manufacturers themselves.

However, generally used industrial air filtering plants have a number of drawbacks tied to the possibility of using non-genuine compatible cartridges/sleeves, i.e. which are not made by the plant manufacturers themselves.

In fact, the use of non-genuine cartridges causes possible malfunctions of the filters and, consequently, of the industrial air filtering plant.

In fact, cartridge manufacturers carry out various tests on their cartridge materials and certify the cartridges for safe use with the relative filter.

This process allows mounting on the corresponding filters cartridges characterized by a degree of filtration efficiency and a life cycle guaranteed by the tests carried out.

In fact, manufacturers of industrial air filtering plants are fully aware of how the filters are made and how they work and are therefore able to correctly assess the characteristics which the relevant cartridges to be used must have.

The same cannot be the for third-party companies which produce non-genuine cartridges without having a complete knowledge of the air filtering plant on which these will be fitted.

For this reason, the non-genuine cartridges used may wear out faster than whatever is warranted by third-party companies and, consequently, negatively affect the filtering efficiency of the filter on which they are fitted or the entire industrial air filtering plant.

Furthermore, the use of non-genuine cartridges could result in damage to the filter itself, which is not designed to work with non-genuine cartridges. Consequently, filter repair or replacement jobs may be required.

Document WO 2005/113112 A1 discloses a filter apparatus comprising a filter cartridge including filter media and an RF tag connected to the filter media. An antenna arrangement is operably connected to a filter conduit arrangement. Document EP 1 985 351 A1 discloses a filter device having a filter unit with a filter housing and a filter insert having a filter frame and a filter element. A transponder is arranged in the area of the filter unit and a reader is arranged in the filter unit or outside the filter unit for reading of transponder.

The main aim of the present invention is to provide a cartridge monitoring system for industrial air filtering plants which allows maintaining high filtration efficiency of the plant over time.

Another object of the present invention is to provide a cartridge monitoring system for industrial plants which permits reducing the risks of malfunctioning of the plant itself.

Another object of the present invention is to provide a cartridge monitoring system for industrial air filtering plants which allows overcoming the aforementioned drawbacks of the prior art within the scope of a simple, rational, easy, efficient to use and cost-effective solution.

The aforementioned objects are achieved by the present cartridge monitoring system for industrial air filtering plants having the characteristics of claim 1.

Other characteristics and advantages of the present invention will become more evident from the description of a preferred, but not exclusive embodiment of a cartridge monitoring system for industrial air filtering plants, illustrated by way of an indicative, but non-limiting example, in the attached drawings in which:

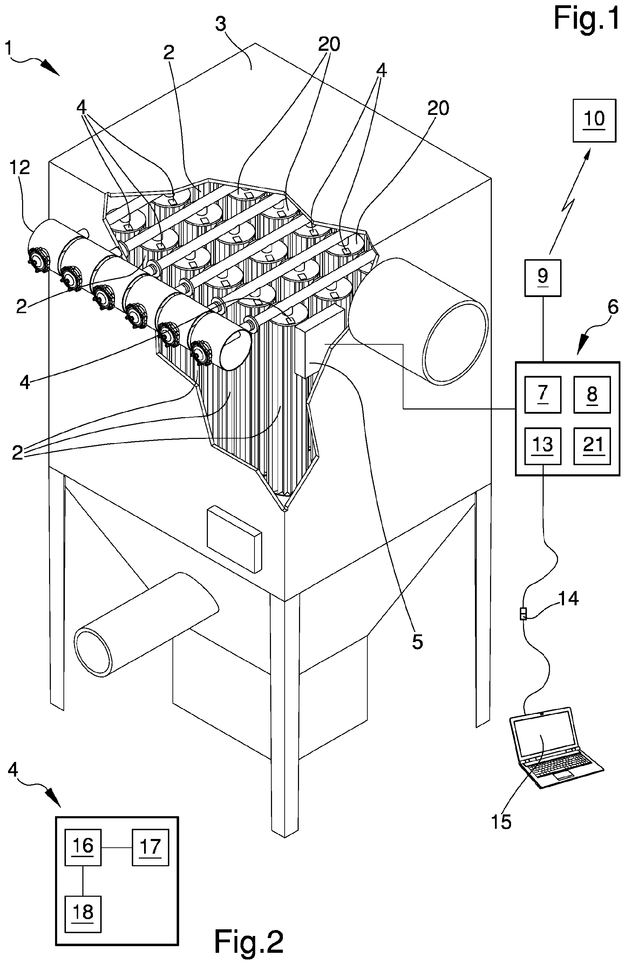

Figure 1 is a schematic view of the system according to the invention;
Figure 2 is a schematic view of a radio frequency identification device of the system according to the invention.

With particular reference to these figures, reference numeral 1 globally indicates a cartridge monitoring system for industrial air filtering plants. Advantageously, the system 1 comprises:
- at least one air filtering cartridge 2 installable inside an air filtering plant 3;
- at least one radio frequency identification device 4 associated with the cartridge 2 and configured to transmit at least one authenticity code relative to the cartridge 2;
- radio frequency communication means 5 associable with the air filtering plant 3 and configured to communicate with the radio frequency identification device 4 to receive the authenticity code relative to the cartridge 2;
- processing and verification means 6 of the authenticity code, connected to the radio frequency communication means 5 and configured to verify the authenticity of the authenticity code relative to the cartridge 2.

In particular, the system 1 comprises a plurality of cartridges 2 for air filtering, each of which is associated with a radio frequency identification device 4.

In this respect, in the remainder of this treatise, reference will be made indistinctly to a radio frequency identification device 4 or to a plurality of radio frequency identification devices 4.

In fact, what has been described and illustrated for a radio frequency identification device 4 is to be considered valid for all radio frequency identification devices 4.

Preferably, the radio frequency identification device 4 is an RFID TAG with particularly small dimensions compared to the dimensions of the cartridge 2 with which it is associated.

In particular, the radio frequency identification device 4 is composed of an RFID of the active type and comprises:
- at least one integrated circuit 16 comprising at least one storage element on which the authenticity code is pre-stored;
- at least one antenna 17 adapted to transmit the authenticity code and connected to the integrated circuit 16;
- at least one battery 18 for the supply of the integrated circuit 16.

Suitably, the system 1 comprises an external protective casing, e.g. IP69 certified, adapted to contain the radio frequency identification device 4 in order to ensure the protection thereof, e.g. from shocks, dust and/or liquids. Alternative embodiments cannot however be ruled out wherein, conveniently, the radio frequency identification device 4 comprises at least one of: passive RFID, semi-passive RFID or semi-active RFID.

Conveniently, the cartridge 2 comprises at least one main frame 20 associable with the air filtering plant 3 for the installation of the cartridge 2.

In particular, the radio frequency identification device 4 is inserted inside the cartridge 2 and forms a monolithic body with the main frame 20.

For example, the main frame 20 can be made of plastic material and, during the production of the main frame itself, e.g. by molding, the radio frequency identification device 4 can be immersed in this material. Such process makes it difficult to remove the radio frequency identification device 4 without clearly damaging the corresponding cartridge 2.

Advantageously, the system 1 can also comprise anti-removal means of the radio frequency identification device 4 of the cartridge 2.

Preferably, the anti-removal means are used as an alternative to the monolithic realization of the radio frequency identification device 4 and of the main frame 20, e.g., through the use of adhesive seals placed between the radio frequency identification device 4 and the corresponding cartridge 2.

Alternative embodiments cannot however be ruled out wherein the anti-removal means are used at the same time as the monolithic embodiment of the radio frequency identification device 4 and of the main frame 20, e.g. by means of the installation of a GPS system associated with the radio frequency identification device 4.

Appropriately, to detect the presence of the radio frequency identification device 4 associated with the corresponding cartridge 2 installed on the air filtering plant 3, the radio frequency communication means 5 are used. Preferably, the radio frequency communication means 5 coincide with a radio frequency transceiver arranged inside the air filtering plant 3.

Conveniently, the radio frequency communication means 5 are of the passive or active type.

In the embodiment shown in the figures, the radio frequency communication means 5 are of the active type.

In the rest of this treatise, by active, used with reference to the radio frequency communication means 5, is meant that the radio frequency communication means 5 are configured to send signals to the radio frequency identification devices 4 and also to receive signals generated by the radio frequency identification devices 4.

In detail, the radio frequency communication means 5 are configured to emit at least one interrogation signal of the radio frequency identification device 4 at predetermined time intervals, and by the fact that the radio frequency identification device 4 is configured to send the authenticity code to the radio frequency communication means 5 after receiving the interrogation signal. Conveniently, the interrogation signals emitted by the radio frequency communication means 5 are generated by the processing and verification means 6.

Alternative embodiments cannot however be ruled out wherein the radio frequency communication means 5 are of the passive type, i.e. are electrically powered, but are only configured to receive the authenticity signals periodically sent by the radio frequency identification devices 4.

In this case the radio frequency identification devices 4 must be of the active type, that is, they must be provided with electric power supply means, such as e.g. a battery, so as to be able to send the identification signals to the radio frequency communication means 5.

Conveniently, the processing and verification means 6 comprise at least one memory unit 7 in which is stored at least one predefined comparison code and by the fact that the processing and verification means 6 comprise comparison means 8 configured to compare the authenticity code with the comparison code and to generate one warning signal in the case wherein the authenticity code is different to the comparison code.

Preferably, the processing and verification means 6 comprise a suitably programmed electronic card or a programmable electronic microcontroller, such as, e.g., a PLC.

Advantageously, the system 1 comprises signaling means 9 connected to the processing and verification means 6 and configured to send the warning signal to an external control central unit 10.

Preferably, the signaling means 9 comprise a wireless network card for the connection to the Internet.

In fact, the external control central unit 10 can be a server connected to the Internet located in a different place to that where the air filtering plant 3 is installed, such as, e.g., the headquarters of the manufacturer of the filtering plant itself.

Nevertheless, alternative embodiments cannot be ruled out wherein the signaling means 9 comprise a network card connected to the Internet via local network, e.g., via Ethernet cable.

Advantageously, the air filtering plant 3 is provided with cleaning means 12 of the type known to a technician skilled in the art and managed by a control central unit.

In this regard, further embodiments cannot be ruled out wherein the control central unit comprises the processing and verification means 6.

This way, the control central unit is configured not only to process and verify the signals and codes used by the system 1, but also to manage the cleaning means 12.

Advantageously, the system 1 comprises storage means 13 configured to store the warning signal.

Adequately, in the particular embodiment shown in the figures, the processing and verification means 6 comprise the storage means 13.

Preferably, the storage means 13 comprise one or more memory banks inside which the warning signal is stored.

Alternative embodiments cannot however be ruled out wherein the processing and verification means 6 store inside the storage means 13 other signals coming from the radio frequency identification device 4, such as, e.g. signals defining the number of working hours of a cartridge 2.

Conveniently, the system 1 comprises connection means 14 to the storage means 13.

In particular, the connection means 14 can be connected to at least one external reading device 15 of the storage means 13 which is adapted to read the warning signal.

Preferably, the external reading device 15 is a computer and the connection means 14 can be a pair of USB ports, installed on the storage means 13 and the computer respectively, and a USB cable for their connection.

The operation of the system 1 is as follows.

Advantageously, once the cartridges 2 have been installed inside the air filtering plant 3, the radio frequency communication means 5 send an interrogation signal to the radio frequency identification devices 4 associated with the corresponding cartridges 2.

Appropriately, the antenna 17 of the radio frequency identification device 4 picks up the interrogation signal which is sent to the integrated circuit 16 which responds by sending the authenticity code to the radio frequency communication means 5.

More specifically, the integrated circuit 16 uses the battery 18 as a power source to send the authenticity code with an energy such as to enable it to be received by the radio frequency communication means 5.

Once the authenticity code has been received, the radio frequency communication means 5 send it to the processing and verification means 6 which, through the comparison means 8, compare it with a preset number to generate at least one warning signal in the event of the number of the authenticity codes differing from the preset number.

In particular, the term "preset number" means the number of cartridges 2 necessary for the operation of the air filtering plant 3.

Conveniently, the processing and verification means 6 comprise at least one initialization unit 21 of the preset number which unit is connected to the memory unit 7 and configured to carry out, in an automated mode, at least the steps of:
- sending an interrogation signal to at least one radio frequency identification device 4 by means of the radio frequency communication means 5;
- detecting the number of authenticity codes sent by the radio frequency identification devices 4 in response to the interrogation signal; and
- storing the detected number inside the memory unit 7, the preset number coinciding with the detected number.

Alternatively, the preset number is manually set by a skilled operator, generally appointed by the manufacturer of the system 1.

Moreover, this operation, both in case it is performed in an automated manner and in case it is performed manually, is performed only once, e.g., during the first startup of the air filtering plant 3.

This way, after the first startup of the air filtering plant 3, if a cartridge 2 were to be replaced with a cartridge not provided with the radio frequency identification device 4, the processing and verification means 6 would generate the warning signal.

Conveniently, the comparison means 8 are also configured to compare at least one authenticity code and at least one comparison code stored inside said memory unit 7 and to generate the warning signal in the event of at least one authenticity code being different to a comparison code.

Advantageously, the comparison between the authenticity code and the comparison code is based on a comparison of the two codes which, if they are different, returns a negative result and generates the warning signal, while if they are the same, returns a positive result, generating, e.g., a signal of verified authenticity.

Alternative embodiments cannot however be ruled out wherein the comparison between the authenticity code and the comparison code takes place in a different way, e.g., wherein the comparison code indicates a range of authentic numerical codes and this comparison checks that the authenticity code falls within this range.

Furthermore, it cannot be ruled out that the identification code comprise several code portions, e.g., a first code portion relating to the manufacturer of the cartridge 2, a second code portion identifying the cartridge 2 and a third code portion used by the processing and verification means 6 to control the second code portion. In this case, therefore, the processing and verification means 6 can comprise a suitable processing algorithm adapted to determine the correctness or otherwise of the code.

With reference to the embodiment shown in the illustrations, the processing and verification means 6 store inside the storage means 13 the warning signal which, at the same time, is also sent through the signaling means 9 to the control central unit 10.

This way, the control central unit 10 can be referred to, for example by an operator, in order to make sure the cartridges 2 used in the air filtering plant 3 are genuine.

Alternatively, the external reading device 15 can be connected directly to the storage means 13, e.g. by an operator.

This way, it is possible to verify the use of genuine cartridges 2, e.g. during maintenance operations of the air filtering plant 3.

Advantageously, the use of both storage means 13 and signaling means 9 allows verifying the genuineness of the cartridges 2 also in the case of one of the storage means 13 and signaling means 9 being defective.

It has in practice been found that the described invention achieves the intended objects.

In particular, the fact is underlined that the use of radio frequency identification devices in conjunction with the use of radio frequency communication means permits ensuring the adequate filtration efficiency of the filtering plant over time.

Furthermore, the system according to the invention permits reducing the risk of malfunctions of the air filtering plant due to the use of non-genuine cartridges. Moreover, the possibility of integrating the processing and verification means in the control central unit of the cartridge cleaning means permits installing the system on any air filtering plant in an easy and minimally invasive way.

## Claims

1. Cartridge monitoring system (1) for industrial air filtering plants, comprising:
- at least one air filtering cartridge (2) installable inside an air filtering plant (3);
- at least one radio frequency identification device (4) associated with said at least one cartridge (2) and configured to transmit at least one authenticity code relative to said at least one cartridge (2);
- radio frequency communication means (5) associable with the air filtering plant (3) and configured to communicate with the radio frequency identification device (4) to receive said at least one authenticity code relative to said at least one cartridge (2);
- processing and verification means (6) of said at least one authenticity code, connected to said radio frequency communication means (5) and configured to verify the authenticity of said at least one authenticity code relative to said at least one cartridge (2);
**characterized in that** said processing and verification means (6) are comprised in a control central unit mounted on said industrial air filtering plant (3) and configured to manage cleaning means (12) mounted on said industrial air filtering plant (3) and adapted to clean said at least one cartridge (2).

2. System (1) according to claim 1, **characterized by** the fact that it comprises a plurality of cartridges (2) installable inside said air filtering plant (3) and **characterized by** the fact that said processing and verification means (6) comprise at least one memory unit (7) configured to store said authenticity codes and comparison means (8) configured to compare the number of said authenticity codes received by said radio frequency communication means (5) with a preset number to generate at least one warning signal in the case where the number of said authenticity codes is different to said preset number.

3. System (1) according to claim 2, **characterized by** the fact that said processing and verification means (6) comprise at least one initialization unit (21) of said preset number connected to said memory unit (7) and configured to perform at least the steps of:
- sending an interrogation signal to said at least one radio frequency identification device (4) by means of said radio frequency communication means (5);
- detecting the number of said authenticity codes sent by said radio frequency identification devices (4) in response to said interrogation signal; and
- storing said detected number inside said memory unit (7), said preset number coinciding with said detected number.

4. System (1) according to one or more of the preceding claims, **characterized by** the fact that said comparison means (8) are configured to compare said at least one authenticity code and at least one comparison code stored inside said memory unit (7) and to generate said at least one warning signal in the case where said at least one authenticity code is different to said at least one comparison code.

5. System (1) according to one or more of the preceding claims, **characterized by** the fact that it comprises signaling means (9) connected to said processing and verification means (6) and configured to send said warning signal to at least one external control central unit (10).

6. System (1) according to one or more of the preceding claims, **characterized by** the fact that it comprises storage means (13) configured to store said at least one warning signal.

7. System (1) according to claim 6, **characterized by** the fact that it comprises connection means (14) for connecting to said storage means (13), said connection means (14) being connectable to at least one external reading device (15) of said storage means (13) which is adapted to read said at least one warning signal.

8. System (1) according to one or more of the preceding claims, **characterized by** the fact that said at least one radio frequency identification device (4) comprises a RFID of the active type and comprises:
- at least one integrated circuit (16) comprising at least one storage element on which said at least one authenticity code is pre-stored;
- at least one antenna (17) adapted to transmit said at least one authenticity code and connected to said integrated circuit (16);
- at least one battery (18) for the supply of said integrated circuit (16).

9. System (1) according to one or more of the preceding claims, **characterized by** the fact that said at least one radio frequency identification device (4) comprises at least one of: passive RFID, semi-passive RFID or semi-active RFID.

10. System (1) according to one or more of the preceding claims, **characterized by** the fact that it comprises anti-removal means of said at least one radio frequency identification device (4) from said at least one cartridge (2).

11. System (1) according to one or more of the preceding claims, **characterized by** the fact that said at least one radio frequency identification device (4) is made in a single body piece with said at least one cartridge (2).

12. System (1) according to one or more of the preceding claims, **characterized by** the fact that said radio frequency communication means (5) are configured to emit at least an interrogation signal of said at least one radio frequency identification device (4) at predetermined time intervals, and by the fact that said at least one radio frequency identification device (4) is configured to send said at least one authenticity code to said radio frequency communication means (5) after receiving said at least one interrogation signal.

13. System (1) according to one or more of the preceding claims, **characterized by** the fact that said radio frequency communication means (5) are of the passive or active type.

## Patentansprüche

1. Kartuschen-Überwachungssystem (1) für industrielle Luftfilteranlagen, umfassend:
- mindestens eine Luftfilterkartusche (2), die in einer Luftfilteranlage (3) installierbar ist;
- mindestens eine Radiofrequenz-Identifikationsvorrichtung (4), die der mindestens einen Kartusche (2) zugeordnet ist und so konfiguriert ist, dass sie mindestens einen Authentizitätscode bezüglich der mindestens einen Kartusche (2) überträgt;
- Radiofrequenz-Kommunikationsmittel (5), die mit der Luftfilteranlage (3) verbindbar sind und so konfiguriert sind, dass sie mit der Radiofrequenz-Identifikationsvorrichtung (4) kommunizieren, um den mindestens einen Authentizitätscode bezüglich der mindestens einen Kartusche (2) zu empfangen;
- Verarbeitungs- und Verifizierungsmittel (6) des mindestens einen Authentizitätscodes, die mit den Radiofrequenz-Kommunikationsmitteln (5) verbunden sind und so konfiguriert sind, dass sie die Authentizität des mindestens einen Authentizitätscodes relativ zu der einen Kartusche (2) verifizieren;
**dadurch gekennzeichnet, dass** die Verarbeitungs- und Verifizierungsmittel (6) in einer Steuerzentraleinheit enthalten sind, die auf der industriellen Luftfilteranlage (3) montiert ist und konfiguriert ist, um Reinigungsmittel (12) zu verwalten, die auf der industriellen Luftfilteranlage (3) montiert sind und angepasst sind, um die mindestens eine Kartusche (2) zu reinigen.

2. System (1) nach Anspruch 1, **dadurch gekennzeichnet, dass** es eine Vielzahl von Kartuschen (2) umfasst, die im Inneren der Luftfilteranlage (3) installierbar sind, und **dadurch gekennzeichnet, dass** die Verarbeitungs- und Verifizierungsmittel (6) mindestens eine Speichereinheit (7) umfassen, die so konfiguriert ist, dass sie die Authentizitätscodes speichert, und Vergleichsmittel (8), die so konfiguriert sind, dass sie die Anzahl der von den Radiofrequenz-Kommunikationsmitteln (5) empfangenen Authentizitätscodes mit einer voreingestellten Anzahl vergleichen, um mindestens ein Warnsignal zu erzeugen, falls die Anzahl der Authentizitätscodes von der voreingestellten Anzahl abweicht.

3. System (1) nach Anspruch 2, **dadurch gekennzeichnet, dass** die Verarbeitungs- und Verifizierungsmittel (6) mindestens eine Initialisierungseinheit (21) der voreingestellten Anzahl umfassen, die mit der Speichereinheit (7) verbunden ist und so konfiguriert ist, dass sie mindestens die folgenden Schritte durchführt:
- Senden eines Abfragesignals an die mindestens eine Radiofrequenz-Identifikationsvorrichtung (4) mit Hilfe der Radiofrequenz-Kommunikationsmittel (5);
- Erfassen der Anzahl der Authentizitätscodes, die von den Radiofrequenz-Identifikationsvorrichtungen (4) als Antwort auf das Abfragesignal gesendet werden; und
- Speichern der erfassten Zahl innerhalb der Speichereinheit (7), wobei die voreingestellte Zahl mit der erfassten Zahl übereinstimmt.

4. System (1) nach einem oder mehreren der vorhergehenden Ansprüche, **dadurch gekennzeichnet, dass** die Vergleichsmittel (8) so konfiguriert sind, dass sie den mindestens einen Authentizitätscode und mindestens einen Vergleichscode, der in der Speichereinheit (7) gespeichert ist, vergleichen und dass sie mindestens ein Warnsignal in dem Fall erzeugen, wenn der mindestens eine Authentizitätscode von dem mindestens einen Vergleichscode verschieden ist.

5. System (1) nach einem oder mehreren der vorhergehenden Ansprüche, **dadurch gekennzeichnet, dass** es Signalisierungsmittel (9) umfasst, die mit den Verarbeitungs- und Verifizierungsmitteln (6) verbunden sind und so konfiguriert sind, dass sie das Warnsignal an mindestens eine externe Steuerzentraleinheit (10) senden.

6. System (1) nach einem oder mehreren der vorhergehenden Ansprüche, **dadurch gekennzeichnet, dass** es Speichermittel (13) umfasst, die so konfiguriert sind, dass die das mindestens eine Warnsignal speichern.

7. System (1) nach Anspruch 6, **dadurch gekennzeichnet, dass** es Verbindungsmittel (14) zum Verbinden mit den Speichermitteln (13) umfasst, wobei die Verbindungsmittel (14) mit mindestens einer externen Lesevorrichtung (15) der Speichermittel (13) verbindbar sind, die geeignet ist, das mindestens eine Warnsignal zu lesen.

8. System (1) nach einem oder mehreren der vorhergehenden Ansprüche, **dadurch gekennzeichnet, dass** die mindestens eine Radiofrequenz-Identifikationsvorrichtung (4) eine RFID vom aktiven Typ umfasst und umfasst:
- mindestens eine integrierte Schaltung (16) mit mindestens einem Speicherelement, auf dem der mindestens eine Authentizitätscode vorgespeichert ist;
- mindestens eine Antenne (17), die geeignet ist, den mindestens einen Authentizitätscode zu übertragen, und die mit der integrierten Schaltung (16) verbunden ist;
- mindestens eine Batterie (18) zur Versorgung der integrierten Schaltung (16).

9. System (1) nach einem oder mehreren der vorhergehenden Ansprüche, **dadurch gekennzeichnet, dass** die mindestens eine Radiofrequenz-Identifikationsvorrichtung (4) mindestens eines der folgenden umfasst: passive RFID, semi-passive RFID oder semi-aktive RFID.

10. System (1) nach einem oder mehreren der vorhergehenden Ansprüche, **dadurch gekennzeichnet, dass** es Anti-Entfernungsmittel der mindestens einen Radiofrequenz-Identifikationsvorrichtung (4) von der mindestens einen Kartusche (2) umfasst.

11. System (1) nach einem oder mehreren der vorhergehenden Ansprüche, **dadurch gekennzeichnet, dass** die mindestens eine Radiofrequenz-Identifikationsvorrichtung (4) in einem einzigen Körperstück mit der mindestens einen Kartusche (2) hergestellt ist.

12. System (1) nach einem oder mehreren der vorhergehenden Ansprüche, **dadurch gekennzeichnet, dass** die Radiofrequenz-Kommunikationsmittel (5) so konfiguriert sind, dass sie mindestens ein Abfragesignal der mindestens einen Radiofrequenz-Identifikationsvorrichtung (4) in vorbestimmten Zeitintervallen aussenden, und dadurch, dass die mindestens eine Radiofrequenz-Identifikationsvorrichtung (4) so konfiguriert ist, dass sie den mindestens einen Authentizitätscode an die Radiofrequenz-Kommunikationsmittel (5) sendet, nachdem sie das mindestens eine Abfragesignal empfangen hat.

13. System (1) nach einem oder mehreren der vorhergehenden Ansprüche, **dadurch gekennzeichnet, dass** die Radiofrequenz-Kommunikationsmittel (5) vom passiven oder aktiven Typ sind.

## Revendications

1. Système (1) de surveillance de cartouche pour installations de filtration d'air industrielles, comprenant :
- au moins une cartouche (2) de filtration d'air pouvant être installée à l'intérieur d'une installation de filtration d'air (3) ;
- au moins un dispositif d'identification par radiofréquence (4) associé à ladite au moins une cartouche (2) et configuré pour transmettre au moins un code d'authenticité relatif à ladite au moins une cartouche (2) ;
- des moyens de communication par radiofréquence (5) pouvant être associés à l'installation de filtration d'air (3) et configurés pour communiquer avec le dispositif d'identification par radiofréquence (4) pour recevoir ledit au moins un code d'authenticité relatif à ladite au moins une cartouche (2) ;
- des moyens de traitement et de vérification (6) dudit au moins un code d'authenticité, connectés auxdits moyens de communication par radiofréquence (5) et configurés pour vérifier l'authenticité dudit au moins un code d'authenticité relatif à ladite au moins une cartouche (2),
**caractérisé en ce que** lesdits moyens de traitement et de vérification (6) sont compris dans une unité centrale de commande montée sur ladite installation de filtration d'air (3) industrielle et configurés pour gérer des moyens de nettoyage (12) montés sur ladite installation de filtration d'air (3) industrielle et adaptés pour nettoyer ladite au moins une cartouche (2).

2. Système (1) selon la revendication 1, **caractérisé par le fait qu'**il comprend une pluralité de cartouches (2) pouvant être installées à l'intérieur de ladite installation de filtration d'air (3) et **caractérisé par le fait que** lesdits moyens de traitement et de vérification (6) comprennent au moins une unité de mémoire (7) configurée pour stocker lesdits codes d'authenticité et des moyens de comparaison (8) configurés pour comparer le nombre desdits codes d'authenticité reçus par lesdits moyens de communication par radiofréquence (5) à un nombre prédéfini pour générer au moins un signal d'avertissement dans le cas où le nombre desdits codes d'authenticité est différent dudit nombre prédéfini.

3. Système (1) selon la revendication 2, **caractérisé par le fait que** lesdits moyens de traitement et de vérification (6) comprennent au moins une unité d'initialisation (21) dudit nombre prédéfini connectée à ladite unité de mémoire (7) et configurée pour effectuer au moins les étapes :
- d'envoi d'un signal d'interrogation audit au moins un dispositif d'identification par radiofréquence (4) au moyen desdits moyens de communication par radiofréquence (5) ;
- de détection du nombre desdits codes d'authenticité envoyés par lesdits dispositifs d'identification par radiofréquence (4) en réponse audit signal d'interrogation ; et
- de stockage dudit nombre détecté à l'intérieur de ladite unité de mémoire (7), ledit nombre prédéfini coïncidant avec ledit nombre détecté.

4. Système (1) selon une ou plusieurs des revendications précédentes, **caractérisé par le fait que** lesdits moyens de comparaison (8) sont configurés pour comparer ledit au moins un code d'authenticité et au moins un code de comparaison stocké à l'intérieur de ladite unité de mémoire (7) et pour générer ledit au moins un signal d'avertissement dans le cas où ledit au moins un code d'authenticité est différent dudit au moins un code de comparaison.

5. Système (1) selon une ou plusieurs des revendications précédentes, **caractérisé par le fait qu'**il comprend des moyens de signalisation (9) connectés auxdits moyens de traitement et de vérification (6) et configurés pour envoyer ledit signal d'avertissement à au moins une unité centrale de commande externe (10).

6. Système (1) selon une ou plusieurs des revendications précédentes, **caractérisé par le fait qu'**il comprend des moyens de stockage (13) configurés pour stocker ledit au moins un signal d'avertissement.

7. Système (1) selon la revendication 6, **caractérisé par le fait qu'**il comprend des moyens de connexion (14) pour se connecter auxdits moyens de stockage (13), lesdits moyens de connexion (14) pouvant être connectés à au moins un dispositif de lecture externe (15) desdits moyens de stockage (13) qui est adapté pour lire ledit au moins un signal d'avertissement.

8. Système (1) selon une ou plusieurs des revendications précédentes, **caractérisé par le fait que** ledit au moins un dispositif d'identification par radiofréquence (4) comprend une RFID du type actif et comprend :
- au moins un circuit intégré (16) comprenant au moins un élément de stockage sur lequel ledit au moins un code d'authenticité est pré-stocké ;
- au moins une antenne (17) adaptée pour transmettre ledit au moins un code d'authenticité et connectée audit circuit intégré (16) ;
- au moins une batterie (18) pour l'alimentation dudit circuit intégré (16).

9. Système (1) selon une ou plusieurs des revendications précédentes, **caractérisé par le fait que** ledit au moins un dispositif d'identification par radiofréquence (4) comprend au moins l'un parmi : une RFID passive, une RFID semi-passive ou une RFID semi-active.

10. Système (1) selon une ou plusieurs des revendications précédentes, **caractérisé par le fait qu'**il comprend des moyens anti-retrait dudit au moins un dispositif d'identification par radiofréquence (4) de ladite au moins une cartouche (2).

11. Système (1) selon une ou plusieurs des revendications précédentes, **caractérisé par le fait que** ledit au moins un dispositif d'identification par radiofréquence (4) est fait d'une seule pièce avec ladite au moins une cartouche (2).

12. Système (1) selon une ou plusieurs des revendications précédentes, **caractérisé par le fait que** lesdits moyens de communication par radiofréquence (5) sont configurés pour émettre au moins un signal d'interrogation dudit au moins un dispositif d'identification par radiofréquence (4) à des intervalles de temps prédéterminés, et **par le fait que** ledit au moins un dispositif d'identification par radiofréquence (4) est configuré pour envoyer ledit au moins un code d'authenticité auxdits moyens de communication par radiofréquence (5) après la réception dudit au moins un signal d'interrogation.

13. Système (1) selon une ou plusieurs des revendications précédentes, **caractérisé par le fait que** lesdits moyens de communication par radiofréquence (5) sont du type passif ou actif.
